# EUROPÄISCHE PATENTANMELDUNG

(11) **EP 0 718 153 A2**
(43) Veröffentlichungstag der Anmeldung: **26.06.1996**
(21) Anmeldenummer: 96102072.4
(22) Anmeldetag: 16.06.1992
(51) Int. Cl.: B60Q 11/00

(54) **Schaltungsanordnung für ein Zugfahrzeug**

(30) Priorität: 28.10.1991 DE 4135546
(62) Teilanmeldung aus: 92110095.4
(71) Anmelder: Gebhard, Angela Barbara, D-76316 Malsch (DE)
(72) Erfinder: Gebhard, Dietrich, Verstorben (DE)
(74) Vertreter: Otten, Hajo, Dr.-Ing.

(57) **Zusammenfassung**

Bei einer Schaltungsanordnung für ein Zugfahrzeug eines aus dem Zugfahrzeug und einem elektrisch an das Zugfahrzeug anschließbaren Hänger bestehenden Wagenzuges weist das Zugfahrzeug einen Blinkgeber (19) und einen Fahrtrichtungsschalter (18) zum Betreiben seiner Blinklichtanlage auf, die über die Schaltungsanordnung (211b) mit einer Blinklichtanlage des Hängers verbindbar ist. Ausgewählte Lampen (17b) der Blinklichtanlage werden über eine zugeordnete, von dem Blinkgeber (19) angesteuerte Treiberschaltung (221) mit hochohmigem Eingang betrieben. Der Blinkgeber (19) erkennt den Ausfall einer unmittelbar angesteuerten Lampe (17a, 17b) als Fehlerzustand und meldet diesen Fehlerzustand, wobei die Schaltungsanordnung (211b) einen Ausfall einer angesteuerten Lampe (17b, 17c) erkennt. Die Schaltungsanordnung (211b) weist eine Umschalteinrichtung (212, 213, 214) auf, die je Fahrtrichtung zyklisch abwechselnd entweder eine Lampe (17b) der Blinklichtanlage des Zugfahrzeuges unmittelbar und eine Lampe (17c) der Blinklichtanlage des Hängers über die Treiberschaltung (221) mit dem Blinkgeber (19) verbindet oder aber eine Lampe (17c) der Blinklichtanlage des Hängers unmittelbar und eine Lampe (17b) der Blinklichtanlage des Zugfahrzeuges über die Treiberschaltung (221) mit dem Blinkgeber (19) verbindet.

## Beschreibung

Die Erfindung betrifft eine Schaltungsanordnung für ein Zugfahrzeug eines aus dem Zugfahrzeug und einem elektrisch an das Zugfahrzeug anschließbaren Hänger bestehenden Wagenzuges, wobei das Zugfahrzeug einen Blinkgeber und einen Fahrtrichtungsschalter vom Betreiben seiner Blinklichtanlage aufweist, die über die Schaltungsanordnung mit einer Blinklichtanlage des Hängers verbindbar ist, und wobei ausgewählte Lampen der Blinklichtanlagen je über eine zugeordnete, von dem Blinkgeber angesteuerte Treiberschaltung mit hochohmigem Eingang betrieben werden, wobei der Blinkgeber den Ausfall einer unmittelbar angesteuerten Lampe als Fehlerzustand erkennt und diesen Fehlerzustand meldet, und wobei die Schaltungsanordnung einen Ausfall einer angesteuerten Lampe erkennt.

Eine derartige Schaltungsanordnung ist aus der DE-PS-4 010 765 bekannt.

Die bekannte Schaltungsanordnung wird beim Nachrüsten eines Zugfahrzeuges auf Hängerbetrieb in das Zugfahrzeug eingebaut, damit auch ohne das Auswechseln des bisherigen Blinkgebers der Fahrzeugführer auch den Ausfall einer der Lampen der Blinklichtanlage des Hängers erkennen kann. Die in Zugfahrzeugen eingebauten Blinkgeber sind nämlich nur dazu ausgelegt, je Fahrtrichtung zwei Lampen zu treiben und beim Ausfall einer der beiden Lampen durch eine veränderte Blinkfrequenz diesen Fehlerzustand anzuzeigen.

Bei der bekannten Schaltungsanordnung werden die Lampen der Blinklichtanlage des Hängers über hochohmige Treiberschaltungen betrieben, die ihrerseits von dem Blinkgeber angesteuert werden, ohne diesen jedoch zu belasten. Wenn die bekannte Schaltungsanordnung erkennt, daß eine angesteuerte Lampe der Blinklichtanlage des Hängers ausgefallen ist - beispielsweise durch Glühfadenbruch -, so trennt sie eine der beiden Lampen der Blinklichtanlage des Zugfahrzeuges von dem Blinkgeber ab und betreibt diese so abgetrennte Lampe über die Treiberschaltung, die bisher die nun ausgefallene und daher funktionslose Lampe der Blinklichtanlage des Hängers gespeist hatte.

Um dies zu ermöglichen, weist die bekannte Schaltungsanordnung ein Relais auf, das in den Strompfad zwischen der vorderen und der hinteren Lampe der Blinklichtanlage des Zugfahrzeuges (je Fahrtrichtungsseite) geschaltet ist. Beim Einbau der Schaltungsanordnung muß also der Strompfad von der vorderen zu der hinteren Lampe der Blinklichtanlage des Zugfahrzeuges aufgetrennt und die Schaltungsanordnung entsprechend zwischengeschaltet werden.

Weiterhin weist die bekannte Schaltungsanordnung eine Hängererkennungsschaltung auf, die an ihrem Ausgang ein Signal erzeugt, das anzeigt, ob ein Hänger elektrisch angeschlossen ist oder nicht. Dieses Ausgangssignal ist in unterschiedlicher Weise mit einem Ausgangssignal einer Fehlererkennungsschaltung verknüpft, die für das Erfassen eines Ausfalls einer angesteuerten Lampe der Blinklichtanlage des Hängers vorgesehen ist. Anhand der Verknüpfung der Signale der Fehlererkennungsschaltung, der Hängererkennungsschaltung und des Blinkgebers selbst ermittelt die bekannte Schaltungsanordnung, ob eine Lampe der Blinklichtanlage des Hängers oder eine Lampe der Blinklichtanlage des Zugfahrzeuges über die hochohmige Treiberschaltung angesteuert werden soll.

Ist eine Lampe der Blinklichtanlage des Hängers ausgefallen, so wird dem Blinkgeber sozusagen eine der Lampen der Blinklichtanlage des Zugfahrzeuges "weggenommen", so daß der Blinkgeber nur noch die andere Lampe der Blinklichtanlage des Zugfahrzeuges zu versorgen hat und folglich vermeintlich den Ausfall einer der beiden Lampen erkennt und dies durch eine veränderte Blinkfrequenz anzeigt.

Wegen der verschiedenartigen Verknüpfungen der unterschiedlichen Signale ist die bekannte Schaltungsanordnung mit einer großen Anzahl von Bauteilen versehen und schaltungstechnisch aufwendig realisiert. Auf diese Weise sind nicht nur die Material- sondern auch die Produktionskosten für die bekannte Schaltungsanordnung sehr hoch.

Auf das Nachrüsten von als Zugfahrzeug vorgesehenen Kraftfahrzeugen entweder mit einer der bekannten Schaltungsanordnung entsprechenden Schaltung oder mit einem neuen Blinkgeber, der drei Lampen je Fahrtrichtung betreiben und überwachen kann, kann jedoch nicht verzichtet werden, da aus Sicherheitsgründen der Fahrzeugführer auch darüber informiert sein muß, ob eine Lampe der Blinklichtanlage des Hängers ausgefallen ist.

Eine Parallelschaltung der Lampen der Blinklichtanlage des Hängers zu den Lampen der Blinklichtanlage des Zugfahrzeuges ist darüberhinaus bei moderneren Zugfahrzeugen nicht möglich, da bei diesen die Lampen der Beleuchtungs- und Signalanlage von einer Sicherungsschaltung in Form einer Lampentestüberwachung überwacht werden. Die Lampentestüberwachung zeigt bereits bei geringen Abweichungen des Lampenstromes von dem vorgegebenen Sollwert eine Fehlfunktion an und öffnet ggf. den Lampenstromkreis. Eine Parallelschaltung von entsprechenden Lampen des Zugfahrzeuges mit Lampen des Hängers führt wegen des nun doppelt so großen Stromes dazu, daß die Sicherungsschaltung unerwünschterweise anspricht.

Hiervon ausgehend ist es Aufgabe der vorliegenden Erfindung, eine Schaltungsanordnung der eingangs genannten Art dahingehend weiterzubilden, daß die vorstehend genannten Nachteile vermieden werden. Insbesondere soll die neue Schaltungsanordnung bei geringem Bauteilbedarf einen einfachen konstruktiven Aufbau ermöglichen.

Diese Aufgabe wird erfindungsgemäß dadurch gelöst, daß die Schaltungsanordnung eine Umschalteinrichtung aufweist, die je Fahrtrichtung zyklisch abwechselnd entweder eine Lampe der Blinklichtanlage des Zugfahrzeuges unmittelbar und eine Lampe der Blinklichtanlage des Hängers über die Treiberschaltung mit dem Blinkgeber verbindet oder eine Lampe der Blinklichtanlage des Hängers unmittelbar und eine Lampe der Blinklichtanlage des Zugfahrzeuges über die Treiberschaltung mit dem Blinkgeber verbindet.

Die der Erfindung zugrundeliegende Aufgabe wird auf diese Weise dadurch gelöst, daß dem Blinkgeber nunmehr abwechselnd sämtliche Lampen der Blinklichtanlagen "sozusagen angeboten" werden, so daß der Blinkgeber spätestens bei dem nächsten Umschalttakt der Umschalteinrichtung mit der zwischenzeitlich ausgefallenen Lampe verbunden wird und den entsprechenden Fehler erkennt und meldet.

In einer Weiterbildung weist die Umschalteinrichtung eine Eingangsschaltung auf, die den zyklischen Umschaltvorgang steuert und bei Ausfall einer unmittelbar angesteuerten Lampe die Umschalteinrichtung in dem Zustand hält, in dem sie die ausgefallene Lampe unmittelbar mit dem Blinkgeber verbindet.

Durch diese Maßnahme wird in vorteilhafter Weise sichergestellt, daß beim Auftreten eines Ausfalls einer Lampe diese Lampe dem Blinkgeber permanent "angeboten" wird, so daß der Blinkgeber in die erhöhte Blinkfrequenz zur Fehleranzeige umschaltet.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen und in Alleinstellung verwendbar sind, ohne den Rahmen der vorstehenden Erfindung zu verlassen.

Die Erfindung ist in der Zeichnung dargestellt und wird in der nachfolgenden Beschreibung näher erläutert. Es zeigen:
- Fig. 1: in prinzipieller Darstellung die über eine Schaltungsanordnung zusammengeschalteten Blinklichtanlagen eines Zugfahrzeuges und eines Hängers;
- Fig. 2: ein erstes Ausführungsbeispiel der Schaltungsanordnung aus Fig. 1, das Gegenstand der Stammanmeldung EP 0 546 244 ist; und
- Fig. 3: in einer Darstellung wie Fig. 2 eine Abwandlung der Schaltungsanordnung, bei der erfindungsgemäß die hintere Lampe der Blinklichtanlage des Zugfahrzeuges und die zugeordnete Lampe der Blinklichtanlage des Hängers zyklisch abwechselnd von dem Blinkgeber und einer Treiberschaltung angesteuert werden.

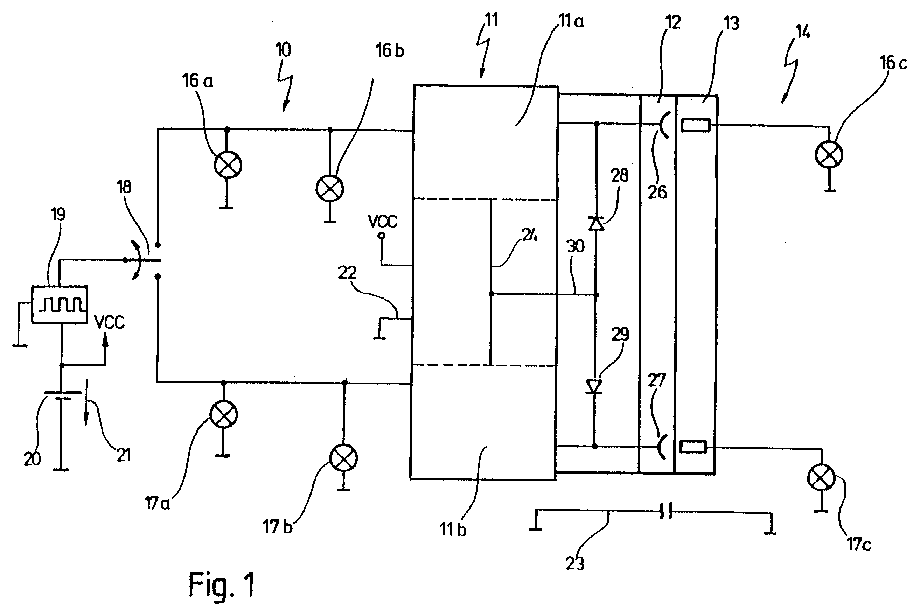

In Fig. 1 ist mit 10 eine elektrische Blinklichtanlage eines nicht näher dargestellten Zugfahrzeuges bezeichnet, die mit einer in das Zugfahrzeug eingebauten Schaltungsanordnung 11 verbunden ist. Die Schaltungsanordnung 11 weist eine Steckdose 12 auf, die einem Stecker 13 zugeordnet ist, über den eine elektrische Blinklichtanlage 14 eines ebenfalls nicht dargestellten Hängers mit der elektrischen Anlage des Zugfahrzeuges verbunden werden kann.

In Fig. 1 sind mit 16 und 17 einzelne Lampen der Blinklichtanlage 10 bzw. 14 bezeichnet. Die Lampen 16 sind die linken und die Lampen 17 die rechten Lampen der Blinklichtanlagen 10 bzw. 14. In dem gezeigten Ausführungsbeispiel bezeichnet 16a, 17a die vorderen Lampen der Blinklichtanlage des Zugfahrzeuges und 16b, 17b die hinteren Lampen der Blinklichtanlage des Zugfahrzeuges, während mit 16c und 17c die Lampen der Blinklichtanlage 14 des Hängers bezeichnet sind.

Wie üblich weist das Zugfahrzeug einen Fahrtrichtungsschalter 18 auf, der drei Stellungen einnehmen kann. Während er in der gezeigten Mittenstellung unwirksam ist, verbindet er in seinen anderen Stellungen einen Blinkgeber 19 mit den linken oder rechten Blinklichtern 16 bzw. 17.

Der Blinkgeber 19 ist mit einer Batterie 20 verbunden, die das Zugfahrzeug mit seiner Betriebsspannung 21 versorgt, die im weiteren auch mit VCC bezeichnet wird. Es ist zu erkennen, daß die Schaltungsanordnung 11 mit der Betriebspannung 21 verbunden ist und ebenfalls einen Masseanschluß 22 aufweist. Weiterhin ist zu erkennen, daß der Hänger über eine Masseleitung 23 mit der Masse des Zugfahrzeuges verbunden ist. In dem gezeigten Ausführungsbeispiel ist die Masseleitung 23 nicht über Steckdose 12 und Stecker 13 geführt.

Weiterhin ist in Fig. 1 gezeigt, daß die linken Lampen 16 der Blinklichtanlagen 10 und 14 mit einer Baugruppe 11a der Schaltungsanordnung 11 verbunden sind, während für die rechten Lampen 17 eine Baugruppe 11b vorgesehen ist. Die beiden Baugruppen 11a und 11b sind miteinander über eine Leitung 24 und mit Kontakten 26, 27 der Steckdose 12 über Dioden 28, 29 verbunden. Die Dioden 28 und 29 sind mit ihren Anoden zusammengeschaltet und hängen mit ihren Kathoden an den Kontakten 26 bzw. 27. Die Anoden der Dioden 28, 29 sind über eine Hängererkennungsleitung 30 mit der Leitung 24, die eine Meldeleitung 24 ist, verbunden, so daß sie in noch zu beschreibender Weise eine Hängererkennungsschaltung darstellt.

Bei gestecktem und elektrisch angeschlossenem Hänger, d.h. wenn der Stecker 13 in die Steckdose 12 gesteckt wurde, wie es in Fig. 1 dargestellt ist, erkennt die Schaltungsanordnung 11 dies über die Hängererkennungsleitung 30. Bei gestecktem Hänger sind nämlich die Kathoden der Dioden 28 und 29 über die Lampen 16c bzw. 17c mit Masse verbunden, so daß durch die Dioden 28, 29 ein Strom fließen kann. Wegen der Parallelschaltung der Dioden 28 und 29 halbiert sich der auf der Hängererkennungsleitung 30 fließende Strom, so daß jede der Lampen 16c, 17c nur die Hälfte des der Hängererkennungsleitung 30 fließenden Stromes führen muß.

Wenn eine der Lampen 16, 17 der Blinklichtanlage 10 des Zugfahrzeuges ausfällt, so erkennt der Blinkgeber 19 bei entsprechend betätigtem Fahrtrichtungsschalter 18 diesen Ausfall an der veränderten Stärke des fließenden Stromes. In diesem Falle erhöht sich in bekannter Weise die Blinkfrequenz, so daß der Fahrer des Zugfahrzeuges auf einer Kontrolleuchte im Wageninneren den Ausfall einer der Lampen 16, 17 seiner Blinklichtanlage 10 erkennt.

Bei gestecktem Stecker 13 fließt auf der Hängererkennungsleitung 30 ein Strom, der in noch näher zu beschreibender Weise ermöglicht, daß die Schaltungsanordnung 11 für einen veränderten Stromfluß in dem Blinkgeber 19 sorgt, wenn der Fahrtrichtungsschalter 18 betätigt wurde und die zugeordnete Lampe 16c bzw. 17c der Blinklichtanlage 14 des Hängers ausgefallen ist, wenn also z.B. ihr Glühfaden gebrochen ist.

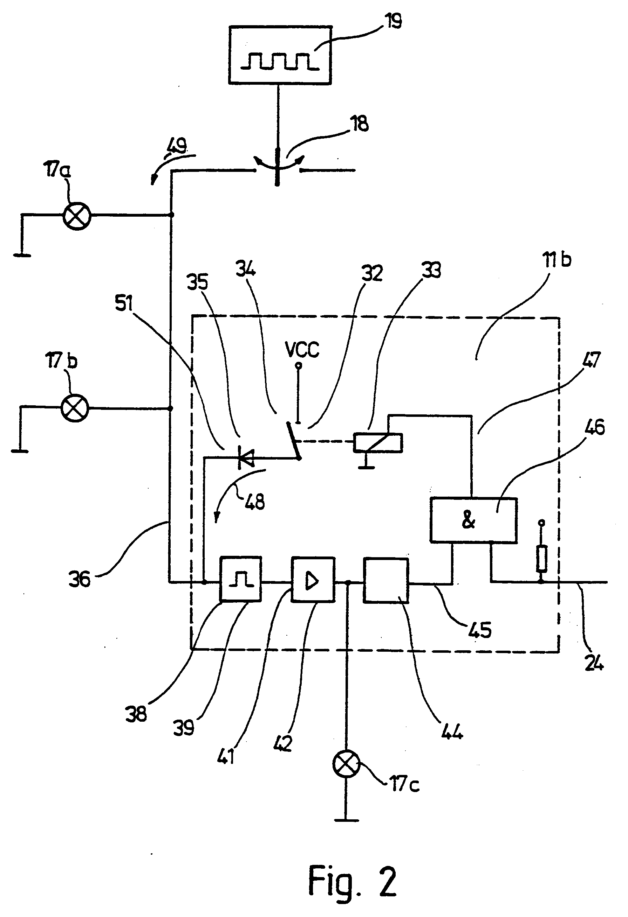

Wie dies gemäß dem Gegenstand der Stammanmeldung geschieht, wird jetzt anhand von Fig. 2 erläutert, in der die den rechten Lampen 17 zugeordnete Baugruppe 11b detaillierter dargestellt ist. Die in gleicher Weise wie die Baugruppe 11b aufgebaute Baugruppe 11a ist in Fig. 2 der Übersicht halber nicht dargestellt.

Die Baugruppe 11b umfaßt ein Schaltorgan 32 in Form eines Relais 33 mit einem Schließkontaktpaar 34, das über eine als Strombegrenzer wirkende Diode 35 mit einer Anschlußleitung 36 verbunden ist, die aus der Baugruppe 11b herausführt. Es ist in Fig. 2 zu erkennen, daß die Anschlußleitung 36 mit den parallel geschalteten rechten Lampen 17a, 17b der Blinklichtanlage 10 des Zugfahrzeuges verbunden ist.

Die Anschlußleitung 36 ist andererseits mit einem Zeitschaltglied 38 verbunden, das in dem gezeigten Ausführungsbeispiel ein Monoflop 39 ist. Der Monoflop 39 ist an seinem Ausgang mit einem hochohmigen Eingang 41 einer Treiberschaltung 42 verbunden, die ihrerseits an ihrem Ausgang sowohl mit der rechten Lampe 17c der Blinklichtanlage 14 des Hängers als auch mit einer Fehlererkennungsschaltung 44 verbunden ist. Die Fehlererkennungsschaltung 44 ermittelt in noch näher zu beschreibender Weise, ob die Lampe 17c ausgefallen ist.

Die Fehlererkennungsschaltung 44 liefert an ihrer Ausgangsleitung 45 ein Signal, das in einem UND-Gatter 46 mit der Meldeleitung 24 verbunden ist. Das zuvor invertierte Signal auf der Meldeleitung 24 gibt an, ob tatsächlich ein Hänger elektrisch angeschlossen ist und das Signal am Ausgang der Fehlererkennungsschaltung 44 liefert eine Aussage darüber, ob die angesteuerte Lampe 17c ausgefallen ist. Sind beide Bedingungen erfüllt, so schaltet das UND-Gatter 46 über seine Ausgangsleitung 47 das Relais 33 durch und das Schließkontaktpaar 34 wird geschlossen. Ist dies geschehen, so wird von der Batteriespannung VCC über das Schließkontaktpaar 34 und die Strombegrenzerdiode 35 ein Fehlerstrom 48 in die Lampen 17a, 17b der Blinklichtanlage 10 des Zugfahrzeuges eingespeist. Dieser Fehlerstrom 48 überlagert sich einem bei 49 angedeuteten Betriebsstrom, der dem Blinkgeber 19 entnommen wird.

Da die Lampen 17a und 17b annähernd gleiche Durchgangswiderstände haben und andererseits die Strombegrenzerdiode 35 eine Widerstandsstrecke 51 darstellt, wie sie auch in dem Blinkgeber 19 zu finden ist, halbieren sich sowohl der Fehlerstrom 48 als auch der Betriebsstrom 49 und fließen je zur Hälfte durch die Lampen 17a und 17b.

Da die Baugruppe 11b bei Ausfall der Lampe 17c in einen Schaltzustand gerät, in dem sozusagen aus zwei parallelen Spannungsquellen, nämlich einmal aus dem Blinkgeber 19 und einmal über die Strombegrenzerdiode 35 aus der Betriebsspannung VCC, Strom in die Lampen 17a und 17b eingespeist wird, bleibt der insgesamt durch diese Lampen 17a, 17b fließende Strom konstant, wird jedoch je etwa zur Hälfte von dem Betriebsstrom 49 und dem Fehlerstrom 48 getragen. Anders ausgedrückt, der aus dem Blinkgeber 19 stammende Betriebsstrom 49 hat etwa die Größe des Fehlerstromes 48 und ist somit gegenüber dem fehlerfreien Betrieb der Blinklampe 17c etwa halbiert.

Dem Blinkgeber 19 wird sozusagen eine reduzierte Stromaufnahme der Blinklichtanlage 10 des Zugfahrzeuges simuliert, was bewirkt, daß der Blinkgeber einen Fehlerzustand annimmt und mit doppelter Blinkfrequenz arbeitet.

Im fehlerfreien Betrieb liefert der Blinkgeber 19 einen Betriebsstrom 49, der die Lampen 17a und 17b versorgt. Über die Anschlußleitung 36 wird bei jedem Takt des Blinkgebers 19 der Monoflop 39 getriggert und schaltet die Treiberschaltung 42 ein, so daß auch die Blinklampe 17c der Blinklichtanlage 14 des Hängers im Takt mit den Lampen 17a und 17b blinkt. Die Impulsdauer des Monoflop 39 entspricht dabei in etwa der Impulsdauer des Blinkgebers 19.

Bei Ausfall der Lampe 17c wird dies - wie oben beschrieben - von der Fehlererkennungsschaltung 44 erkannt, die über das UND-Gatter 46 das Relais 33 schaltet. Ohne den Monoflop 39 würde das Relais 33 jetzt in eine Art Selbsthaltefunktion übergehen, denn über den Fehlerstrom 48 würde die TIeiberschaltung 42 ständig angesteuert, so daß die Fehlererkennungsschaltung 44 ein permanentes Fehlersignal ausgeben wurde. Dies wiederum würde dazu führen, daß das UND-Gatter 46 das Relais 33 ständig geschlossen hielte. Der Fehlerstrom 48 und die Treiberschaltung 42 sind jedoch über das Monoflop 39 sozusagen entkoppelt, da das Monoflop 39 unabhängig von dem Vorliegen eines Fehlerstromes 48 nach seiner festgelegten Taktdauer zurückspringt und die Ansteuerung der Treiberschaltung 42 zurücknimmt. Ist dies geschehen, fällt das UND-Gatter in seinen entgegengesetzten Betriebszustand und das Relais 33 öffnet das Schließkontaktpaar 34 wieder.

Zusammengefaßt läßt sich sagen, daß beim Ausfall einer angesteuerten Lampe 17c der Blinklichtanlage 14 des Hängers in die Blinklichtanlage 10 des Zugfahrzeuges ein Fehlerstrom 48 eingespeist wird, der sich dem vom Blinkgeber 19 gelieferten Betriebsstrom 49 derart überlagert, daß in den Lampen 17a und 17b weiterhin ein Strom gleicher Stärke fließt, wodurch sich der Betriebsstrom 49 gegenüber dem fehlerfreien Betrieb halbiert, was der Blinkgeber 19 als Fehlerzustand erkennt und meldet.

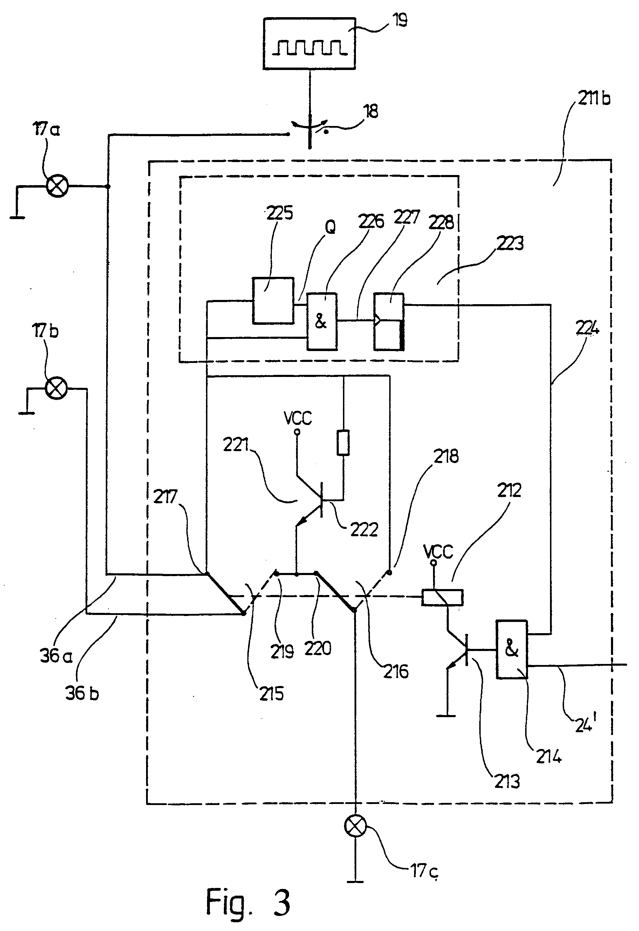

In Fig. 3 ist in einer zu Fig. 2 vergleichbaren Darstellung die erfindungsgemäße Schaltungsanordnung gezeigt. Dort ist eine Baugruppe 211b dargestellt, die zwischen die in Anschlußleitungen 36a und 36b aufgeteilte Anschlußleitung 36, also zwischen die Lampen 17a und 17b der Blinklichtanlage 10 des Zugfahrzeuges geschaltet ist. Die Baugruppe 211b umfaßt ein Relais 212, dessen Spule zwischen VCC und einen Halbleiterschalter 213 geschaltet ist. Der Halbleiterschalter 213 wird über den Ausgang einer UND-Schaltung 214 angesteuert, deren eine Eingang von der Meldeleitung 24 beaufschlagt wird. Das Relais 212 weist zwei Umschaltkontakte 215 und 216 auf, wobei der Umschaltkontakt 215 mit seinem gemeinsamen Ausgang über die Anschlußleitung 36b mit der Lampe 17b verbunden ist, während der Umschaltkontakt 216 mit seinem Ausgangsanschluß mit der Lampe 17c in Verbindung steht.

Die Ruhepositionen der Umschaltkontakte 215, 216 sind in Fig. 3 mittels durchgezogener Linien dargestellt, während die Arbeitspositionen in Fig. 3 gestrichelt angedeutet sind. Es ist zu erkennen, daß die Umschaltkontakte 215, 216 wechselseitig derart miteinander verbunden sind, daß jeweils ein Ruheeingang mit einem Arbeitseingang verbunden ist. So ist der Ruheeingang 217 des Umschaltkontaktes 215 mit dem Arbeitseingang 218 des Umschaltkontaktes 216 verbunden, während der Arbeitseingang 219 mit dem Ruheeingang 220 verbunden ist. Der Ruheeingang 217 ist ebenfalls über die Anschlußleitung 36a mit dem Blinkgeber 19 über den Fahrtrichtungsschalter 18 verbindbar. Der Ruhekontakt 220 ist dagegen mit dem Ausgang einer Treiberschaltung 221 verbunden, deren Eingang 222 ebenfalls über die Anschlußleitung 36a und den Fahrtrichtungsschalter 18 mit dem Blinkgeber 19 verbindbar ist.

Die Anordnung ist derart getroffen, daß in der in Fig. 3 gezeigten Ruheposition bei eingeschaltetem Fahrtrichtungsschalter 18 die Signale des Blinkgebers 19 unmittelbar über den Umschaltkontakt 215 auf die Lampe 17b der Blinklichtanlage 10 des Zugfahrzeuges gelangen. Diese Signale werden andererseits von der Treiberschaltung 221 hochohmig abgegriffen und über den Umschaltkontakt 216 auf die Lampe 17c der Blinklichtanlage 14 des Hängers gegeben. Wenn das Relais 212 jetzt in noch näher zu beschreibender Weise umgeschaltet wird, so erfolgt der Betrieb der Lampe 17c über den Umschaltkontakt 216 und die Anschlußleitung 36a unmittelbar durch den Blinkgeber 19, während die Lampe 17b über den Umschaltkontakt 215 von der Treiberschaltung 221 mit Strom versorgt wird. Je nach Stellung des Relais 212 treibt der Blinkgeber 216 also entweder die Lampe 17b oder die Lampe 17c unmittelbar, während die jeweils andere Lampe 17c oder 17b über die Treiberschaltung 221 betrieben wird. In dem einen Schaltzustand würde der Blinkgeber 19 also den Ausfall der Lampe 17b als Fehlerzustand erkennen, während in dem anderen Schaltzustand dagegen der Ausfall der Lampe 17c erfaßt würde. Ein Ausfall der Lampe 17a wird im übrigen immer von dem Blinkgeber 19 erkannt werden.

Das Umschalten des Relais 212 erfolgt über eine Schaltgruppe 223, deren Steuerleitung 224 auf den zweiten Eingang des UND-Gatters 214 geführt ist. Wenn also auf der Meldeleitung 24' angezeigt wird, daß ein Hänger elektrisch angeschlossen ist, kann über die Steuerleitung 224 das Relais 212 entweder in den Arbeitszustand (in Fig. 3 gestrichelte Linien) oder in den Ruhezustand versetzt werden. Dieses Umschalten erfolgt zyklisch in Übereinstimmung mit dem Takt des Blinkgebers 19, so daß während einer Blinkperiode die Lampe 17b und während der nächsten die Lampe 17c direkt von dem Blinkgeber 19 betrieben und somit auf einen Fehlerzustand überprüft wird. Ist die gerade direkt angesteuerte Lampe 17b oder 17c ausgefallen, so erkennt der Blinkgeber 19 dies durch den verminderten Stromverbrauch und schaltet auf eine kürzere Taktzeit. Diese kürzere Taktzeit wird von der Schaltgruppe 223 erkannt, die daraufhin ihre Steuerleitung 224 in dem gerade eingenommenen Zustand beläßt, so daß das Relais 212 in allen weiteren Taktperioden des Blinkgebers 19 in dem gerade eingenommenen Schaltzustand bleibt. Sobald also ein Fehlerzustand einer gerade unmittelbar angesteuerten Lampe 17b oder 17c erkannt wird, bleibt das Relais 212 in dem Zustand, in dem gerade die ausgefallene Lampe unmittelbar von dem Blinkgeber 19 angesteuert wird.

Auf diese Weise ist sichergestellt, daß der Blinkgeber während jeder Taktperiode einen Fehlerzustand erkennt und somit permanent mit erhöhter Blinkfrequenz arbeitet und diesen Fehler auch anzeigt. Die nicht defekte andere Lampe 17c oder 17b wird jetzt über die Treiberschaltung 221 betrieben, die wegen ihres hochohmigen Einganges den Blinkgeber 19 nicht belastet. Andererseits wird so sichergestellt, daß die nicht ausgefallene Lampe 17c oder 17b weiter in Betrieb ist.

In Fig. 3 ist ferner zu erkennen, daß die Schaltgruppe 223 eine Eingangsschaltung 225 aufweist, die immer unmittelbar über die Anschlußleitung 36a mit dem Fahrtrichtungsschalter 18 verbunden ist und somit bei eingeschaltetem Fahrtrichtungsschalter 18 unmittelbar die Signale des Blinkgebers 19 aufnimmt. Die Eingangsschaltung 225 ist so ausgelegt, daß sie die Taktzeiten des Blinkgebers 19 mißt und an ihrem Ausgang Q ein logisches H-Signal abgibt, wenn der Blinkgeber mit einer niedrigen Frequenz arbeitet, also keine Lampe ausgefallen ist. Schaltet der Blinkgeber 19 dagegen auf eine erhöhte Frequenz um, so erkennt dies die Eingangsschaltung 225 und schaltet ihren Ausgang Q dementsprechend auf logisch L.

Der Ausgang Q der Eingangsschaltung 225 ist mit einem Eingang eines UND-Gatters 226 verbunden, während der andere Eingang des UND-Gatters 226 unmittelbar mit der Anschlußleitung 36a verbunden ist. Auf diese Weise ist sichergestellt, daß die UND-Schaltung 226 mit ihrem Ausgang 227 solange den Taktsignalen des Blinkgebers 19 folgt, wie die langsame Taktfrequenz eines fehlerfreien Zustandes vorliegt, der Ausgang Q der Eingangsschaltung 225 also auf logisch H liegt. Erkennt die Eingangsschaltung 225 dagegen eine einen Fehler anzeigende erhöhte Taktfrequenz, so bleibt der Ausgang 227 des UND-Gatters 226 ständig auf logisch L.

Der Ausgang 227 nun ist auf den CLOCK-Eingang eines Toggle-Flip-Flop 228 geschaltet, dessen Ausgang die Steuerleitung 224 speist. Das Toggle-Flip-Flop 228 ist negativ flankengesteuert, so daß jedes Mal, wenn der Ausgang 227 des UND-Gatters 226 von logisch H auf logisch L umschaltet, wenn also die Blinkdauer des Blinkgebers 19 beendet ist und eine Dunkelpause folgt, das Signal auf der Steuerleitung 224 seinen logischen Zustand wechselt. Anders ausgedrückt, wechselt die Steuerleitung 224 ihren logischen Zustand nach jeder Blinkperiode des Blinkgebers 19, allerdings nur solange wie der Blinkgeber 19 mit der langsamen Blinkfrequenz arbeitet.

Zusammengefaßt ermöglicht es die in Fig. 3 dargestellte Schaltung also, immer abwechselnd eine der beiden Lampen 17b und 17c direkt von dem Blinkgeber 19 anzusteuern und auf einen möglichen Ausfall zu untersuchen. Liegt einer solcher Ausfall vor, sorgt die Schaltgruppe 223 dafür, daß das Relais 212 in dem gerade ausgewählten Zustand bleibt, so daß im folgenden die defekte Lampe immer vom Blinkgeber 19 angesteuert und als ausgefallen über eine erhöhte Blinkfrequenz angezeigt wird.

## Patentansprüche

1. Schaltungsanordnung für ein Zugfahrzeug eines aus dem Zugfahrzeug und einem elektrisch an das Zugfahrzeug anschließbaren Hänger bestehenden Wagenzuges, wobei
- das Zugfahrzeug einen Blinkgeber (19) und einen Fahrtrichtungsschalter (18) zum Betreiben seiner Blinklichtanlage (10) aufweist, die über die Schaltungsanordnung (11) mit einer Blinklichtanlage (14) des Hängers verbindbar ist,
- ausgewählte Lampen (16b, 16c; 17b, 17c) der Blinklichtanlagen (10, 14) je über eine zugeordnete, von dem Blinkgeber (19) angesteuerte Treiberschaltung (221) mit hochohmigem Eingang betrieben werden;
- der Blinkgeber (19) den Ausfall einer unmittelbar angesteuerten Lampe (16a, 17a; 16b, 17b; 16c, 17c) als Fehlerzustand erkennt und diesen Fehlerzustand meldet;
- und wobei die Schaltungsanordnung (211) einen Ausfall einer angesteuerten Lampe (16b, 17b; 16c, 17c) erkennt,
dadurch gekennzeichnet, daß die Schaltungsanordnung (211) eine Umschalteinrichtung (212, 213, 214, 223) aufweist, die je Fahrtrichtung zyklisch abwechselnd entweder eine Lampe (16b, 17b) der Blinklichtanlage (10) des Zugfahrzeuges unmittelbar und eine Lampe (16c, 17c) der Blinklichtanlage (14) des Hängers über die Treiberschaltung (221) mit dem Blinkgeber (19) verbindet oder eine Lampe (16c, 17c) der Blinklichtanlage (14) des Hängers unmittelbar und eine Lampe (16b, 17b) der Blinklichtanlage (10) des Zugfahrzeuges über die Treiberschaltung (221) mit dem Blinkgeber (19) verbindet.

2. Schaltungsanordnung nach Anspruch 1, dadurch gekennzeichnet, daß die Umschalteinrichtung (212, 213, 214, 223) eine Eingangsschaltung (223) aufweist, die den zyklischen Umschaltvorgang steuert und bei Ausfall einer unmittelbar angesteuerten Lampe (16b, 17b; 16c, 17c) die Umschalteinrichtung (212, 213, 214) in dem Zustand hält, in dem sie die ausgefallene Lampe (16b, 17b; 16c, 17c) unmittelbar mit dem Blinkgeber (19) verbindet.
